# EUROPÄISCHE PATENTSCHRIFT

(11) **EP 0 958 848 B1**
(45) Veröffentlichungstag und Bekanntmachung des Hinweises auf die Patenterteilung: **23.11.2005**
(21) Anmeldenummer: 99108491.4
(22) Anmeldetag: 30.04.1999
(51) Int. Cl.: A63K 3/04

(54) **Halterung für Stangen von Sprunghindernissen**
Device for holding bars for jumping obstacles
Dispositif de retenue pour barres de sauts d'obstacles

(30) Priorität: 13.05.1998 DE 19821398
(43) Veröffentlichungstag der Anmeldung: 24.11.1999
(60) Teilanmeldung: 04103294.7
(73) Patentinhaber: Beck, Bernd, D-35794 Mengerskirchen (DE); Beck, Michael, 35794 Mengerskirchen (DE); Beck, Volker, D-65549 Limburg (DE)
(72) Erfinder: Beck, Bernd, D-35794 Mengerskirchen (DE); Beck, Michael, 35794 Mengerskirchen (DE); Beck, Volker, D-65549 Limburg (DE)
(74) Vertreter: Weber, Dieter

(56) Entgegenhaltungen:
- DE-C- 4 227 108
- FR-A- 2 417 992

## Beschreibung

Die vorliegende Erfindung betrifft eine Halterung für Stangen von Sprunghindernissen im Pferdesport, mit einer schalenförmigen Stangenaufnahme, welche an einer im allgemeinen vertikal angeordneten Schiene eines Ständers aufgehängt ist, wobei die Aufnahme und die Schienen über Kopfbolzen, die sich von einem der beiden Teile in Schlitze an dem anderen der beiden Teile erstrecken, miteinander verbunden sind und wobei die Schlitze schmale Schlitzteile mit einer Breite haben, die in etwa der Breite des Schaftes der Kopfbolzen entspricht und geringer ist als der Durchmesser des Kopfes der Kopfbolzen, und eine Aufweitung haben, durch welche die Köpfe der Kopfbolzen hindurchsteckbar sind, um auf diese Weise die Kopfbolzen in die Schlitze einsetzen zu können und durch Einführen in den schmalen Schlitzteil verriegeln zu können.

Derartige Stangenhalterungen sind schon seit langem für die Hindernisse im Pferdespringsport bekannt. Die im allgemeinen aus Holz oder Aluminium hergestellten Stangen mit einem Durchmesser in der Größenordnung von 15 cm werden in die entsprechend konkav ausgebildete, schalenförmige Auflage eingelegt, so daß sie im Falle eines horizontalen Anstoßens der Hufe eines über das Hindernis springenden Pferdes an die Stange aus der schalenförmigen Aufnahme nach vom oder hinten herausbewegt werden und herabfallen. Dies geschieht gelegentlich beim "normalen" Überspringen eines Hindernisses, wenn das Pferd nicht optimal abspringt, also zum Beispiel etwas zu flach, zu früh oder zu spät abspringt oder auch während des Sprunges mit den Hinterhufen ausschlägt.

Gelegentlich kann es jedoch auch vorkommen, daß ein Sprung völlig mißlingt, sei es daß das Pferd im letzten Moment versucht, vor dem Hindernis zu stoppen, oder viel zu früh oder zu spät abspringt, wobei dies alles auch durch Fehler des Reiters bedingt sein kann. In solchen Fällen tritt das Pferd unter Umständen mit seinen Hufen tief zwischen die Hindernisstangen und kann womöglich die Hindernisstangen auch mit seinem Körpergewicht stark belasten und wird dabei im allgemeinen von der Stange abrutschen. Dies sind für Pferd und Reiter relativ gefährliche Situationen, die ein erhebliches Verletzungsrisiko in sich bergen.

Um dieses Risiko zu vermindern, sind bereits Vorschriften für die Aufhängung von Hindernisstangen erlassen worden, die unter anderem vorsehen, daß die Kopfbolzen, mit welchen die Aufnahmen an den Ständern aufgehängt sind, bei einer Scherkraft von ca. 800 kg brechen bzw. abscheren müssen. Inzwischen sind auch bereits neue Bestimmungen erlassen worden, die vorschreiben, daß künftig die Stangenhalterung bereits bei einer vertikalen Belastung von nur 140 kg nachgeben bzw. die Stange freigeben soll.

Eine entsprechende Schwächung der Kopfbolzen, an welchen die Stangenaufnahme aufgehängt ist, würde jedoch die Gebrauchsfähigkeit entsprechender Aufnahmen beträchtlich einschränken, da Belastungen von 140 kg aufgrund von Hebelkräften während der Handhabung der Aufnahmen, Ständer und Hindernisstangen, d. h. zum Beispiel während des Auf- und Abbaus von Hindernissen, auch auftreten können, also nicht nur wenn gerade ein Pferd in das Hindernis hineinspringt bzw. -tritt.

Eine solche Halterung ist auch aus der FR 2 417 992 bekannt. Hier besteht die Halterung aus einem an einem Pfosten angreifenden gabel- oder bügelförmigen Ansatz an der Auflage, der sich bei einer vorgegebenen, im wesentlichen in Richtung auf den Fuß des Pfostens wirkenden Belastung der Barriere aus seiner Verankerung mit dem Pfosten löst. Diese Halterung hat jedoch den Nachteil, daß sie bei bestehenden Sprunghindemissen nicht nachgerüstet werden kann und zudem aufgrund ihrer Gestaltung nicht reproduzierbar, d.h. mit gleichbleibender Auslösekraft, auslöst.

Gegenüber diesem Stand der Technik liegt daher der vorliegenden Erfindung die Aufgabe zugrunde, eine Halterung mit den eingangs genannten Merkmalen zu schaffen, mit welchen die gestellten Forderungen leichter erfüllbar sind, d.h. welche bei einer vorgegebenen und relativ niedrigen vertikalen Belastung nachgibt, so daß die Stange bzw. die Stangenaufnahme bei Überschreiten dieser Belastung nach unten freigegeben wird, wobei eine Zerstörung oder Beschädigung der Stangenhalterung nach Möglichkeit vermieden werden soll. Gleichzeitig soll die Halterung derart ausgebildet sein, daß sie an bestehenden Sprunghindemissen nachgerüstet werden kann.

Diese Aufgabe wird dadurch gelöst, daß die Schlitze an ihrem von der Aufweitung abgewandten Ende offen sind, und zwar in Form eines nochmals gegenüber dem schmalen Schlitzteil verjüngten Schlitzabschnittes, dessen Breite so bemessen ist, daß die in dem schmalen Schlitzteil aufgenommenen Bolzen bzw. Bolzenschäfte nur unter Überwindung der vorgegebenen, in Längsrichtung des Schlitzes wirkenden Kraft in diesen verjüngten Schlitzabschnitt hinein und zum offenen Ende des Schlitzes hindurchbewegbar sind, wobei die Schlitze an ihrem von der Aufweitung abgewandten Ende offen sind, und zwar in Form eines nochmals verjüngten Schlitzabschnittes, dessen Breite so bemessen ist, daß die in dem schmalen Schlitzteil aufgenommenen Bolzenschäfte nur unter Überwindung einer vorgegebenen, in Längsrichtung des Schlitzes wirkenden Kraft in diesen verjüngten Schlitzabschnitt hinein und zum offenen Ende des Schlitzes hindurchdrückbar ist

Im Gegensatz zu den Ausführungen des Standes der Technik, bei welchem die Kopfbolzen in an beiden Enden geschlossene Schlitze eingriffen, so daß die Kopfbolzen nur durch Herausheben der Köpfe der Bolzen durch die Aufweitung, nicht jedoch in Längsrichtung der Schlitze aus diesen herausbewegbar waren, sieht also die vorliegende Erfindung vor, daß die die Kopfbolzen aufnehmenden Schlitze in Richtung der auftretenden vertikalen Belastung offen sind, allerdings nur in Form eines verjüngten Schlitzabschnittes, der schmaler ist als der Schaft des Bolzens, so daß dieser bei normalen Belastungen, d.h. durch das Gewicht der Hindernisstange und selbst dann, wenn sich eine normal gebaute Person auf die Hindemisstange draufsetzt, nicht in diesen schmalen Schlitzabschnitt hinein und hindurchtreten kann. Erst wenn eine vorgegebene Grenzbelastung erreicht ist, weitet sich der verjüngte Schlitzabschnitt unter der Kraft des in diesen Abschnitt hineindrückenden Bolzenschaftes auf und läßt den Bolzenschaft hindurchtreten, so daß sich dementsprechend die Stangenauflage von dem Ständer löst und dadurch die Stange herabfällt bzw. nach unten gedrückt wird. Hierdurch wird das Verletzungsrisiko für das Pferd verringert, Stürze können leichter vermieden werden und somit wird auch für den Reiter bzw. die Reiterin eine solche Situation weniger gefährlich.

Die die entsprechende Schlitze aufweisende Schiene bzw. ein entsprechender Schienenabschnitt kann gemäß einer Ausführungsform der Erfindung mit der Stangenauflage, und zwar auf der der schalenförmigen Stangenaufnahme abgewandten Seite, einstückig verbunden sein. Dementsprechend wären die Kopfbolzen an einem Ständer anzuordnen und der Schlitz wäre nach oben offen, so daß die Auflage mit dem daran befestigten Schienenabschnitt bei einer entsprechenden Belastung nach unten bewegt würde, wobei die Bolzen relativ zu der Schiene nach oben aus den Schlitzen herausbewegt würden.

Erfindungsgemäß wird die nachgiebige Verbindung über ein zwischengeschaltetes Adapterteil verwirklicht wird, indem nämlich eine herkömmliche Schiene an einem Ständer mit einer großen Anzahl vertikal übereinander ausgerichteter Schlitze verwendet wird, in welche der Adapter mit an seiner Rückseite angebrachten Kopfbolzen in der üblichen Art und Weise in irgendeiner gewünschten Höhe eingehängt werden kann. Der Adapter selbst ist dann wie eine herkömmliche Stangenauflage fest in den Aufnahmeschlitzen des Ständers verriegelt. Auf seiner der Stangenauflage zugewandten Seite weist jedoch der Adapter eine Schiene bzw. einen Schienenabschnitt mit der erfindungsgemäßen Schlitzausgestaltung auf, so daß wiederum eine herkömmliche Stangenauflage in diese erfindungsgemäß ausgestalteten Schlitze des Adapters eingehängt werden kann.

Die Kopfbolzen sind dementsprechend fest mit der Stangenauflage verbunden. Auch bei dieser Adapterkonstruktion könnte jedoch die umgekehrte Zuordnung von Schlitzen und Kopfbolzen erfolgen, indem der Adapter auf seiner der Stangenauflage zugewandten Seite einen oder zwei Kopfbolzen aufweist, die in entsprechende, im normalen Gebrauchszustand nach oben offene Schlitze einer mit der Auflage fest verbundenen Schiene eingreifen könnten.

Dabei kann auch ein Kopfbolzenadapter verwendet werden, d.h. eine Platte oder ein kleiner Block, die bzw. der beidseitig je einen oder im erforderlichen Rastermaß auch je zwei oder mehr Kopfbolzen aufweist, wobei die Kopfbolzen auf der einen Seite in eine herkömmliche Ständerschiene eingehängt werden könnten, während der oder die Kopfbolzen auf der anderen Seite in die erfindungsgemäß mit einem oder mehreren, in diesem Fall nach oben offenen, Schlitzen versehene Schiene an einer Stangenauflage eingehängt werden würde.

Besonders bevorzugt und zweckmäßig ist eine Ausgestaltung der Erfindung, bei welcher bei einer Halterung jeweils zwei Bolzen im Abstand vertikal übereinander vorgesehen und insbesondere an der Auflage angebracht sind. Die gleichzeitig übereinander in entsprechenden Schlitzen angeordneten Kopfbolzen verhindern damit eine Verdrehung der Halterung bzw. der Auflage um die Bolzenachse bzw. einer zur Bolzenachse parallelen Achse, wie dies bei Verwendung nur eines einzigen Bolzens möglich wäre. Bei dieser Ausgestaltung ist es aber sinnvoll, wenn nur einer der beiden Schlitze, in welchen die Kopfbolzen aufgenommen sind, den verjüngten Schlitzabschnitt aufweist, der sich bei der vorgegebenen Druckkraft aufweitet, um den Bolzenschaft hindurchtreten zu lassen, während der andere der beiden Schlitze vollständig offen ist, d.h. durchgehend die Breite des schmalen Schlitzabschnittes hat, die der Dicke des Bolzenschaftes entspricht.

Weiterhin besonders bevorzugt ist eine Ausführungsform der Erfindung, bei welcher der entsprechende Schienenabschnitt an einem Adapter zwei vertikal im Abstand übereinander angeordnete Schlitze aufweist, die jeweils eine Aufweitung haben, wobei die beiden Aufweitungen denselben Abstand haben wie die Köpfe der Kopfbolzen an dem entsprechenden Gegenstück und wobei die beiden Schlitze entweder über einen verjüngten Schlitzabschnitt, der schmaler ist als die Kopfbolzenschäfte breit sind, oder über einen schmalen Schlitzabschnitt, der dieser Schaftbreite entspricht, miteinander verbunden sind, wobei im letzteren Fall ein entsprechend verjüngter, offener Schlitzabschnitt an dem der Schlitzverbindung abgewandten Ende eines der beiden Schlitze angeordnet sein müßte.

Bei der Variante, bei welcher die beiden Schlitze durch einen verjüngten Schlitzabschnitt miteinander verbunden sind, ist weiterhin eine Ausgestaltung bevorzugt, bei welcher parallel neben den Schlitzen und insbesondere neben dem die beiden Schlitze verbindenden verjüngten Schlitzabschnitt zusätzliche Langlöcher in der die Schlitze aufweisenden Schiene vorgesehen sind, welche die Elastizität bzw. die Bewegbarkeit der Wände des verjüngten Schlitzabschnittes erhöhen.

In der bevorzugten Ausführungsform der Erfindung ist vor allem die den verjüngten Schlitzbereich aufweisende Schiene aus einem faserverstärkten Kunststoffmaterial hergestellt, wobei vorzugsweise auch die Stangenaufnahme aus demselben Material besteht.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Draufsicht von vom auf eine Stangenaufnahme,
- Figur 2: eine Seitenansicht einer Stangenaufnahme entsprechend einem Blick auf die Aufnahme gemäß Figur 1 von links,
- Figur 3: eine Vorderansicht auf eine Adapterschiene,
- Figur 4: eine Seitenansicht einer Adapterschiene mit einer eingehängten Stangenaufnahme,
- Figur 5: eine Draufsicht von oben auf eine Adapterschiene mit Stangenaufnahme entsprechend einer um 90° verdrehten Ansicht von oben auf Figur 4,
- Figuren 6a - c: verschiedene Ansichten und Schnittansichten einer alternativen Adapterschiene,
- Figuren 7a - c: eine weitere Ausführungsform für eine Halterung gemäß der vorliegenden Erfindung und
- Figuren 8a - c: nochmals eine weitere Ausführungsform der vorliegenden Erfindung.

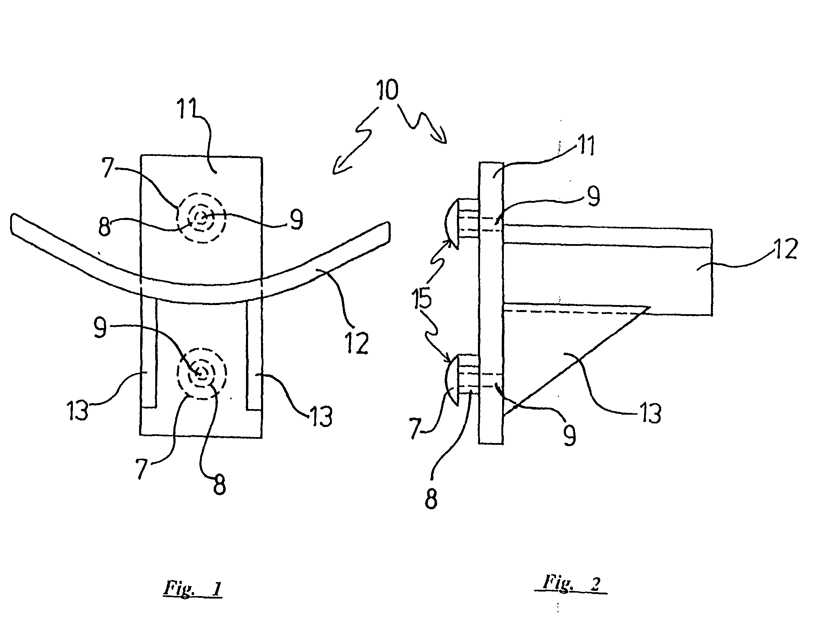

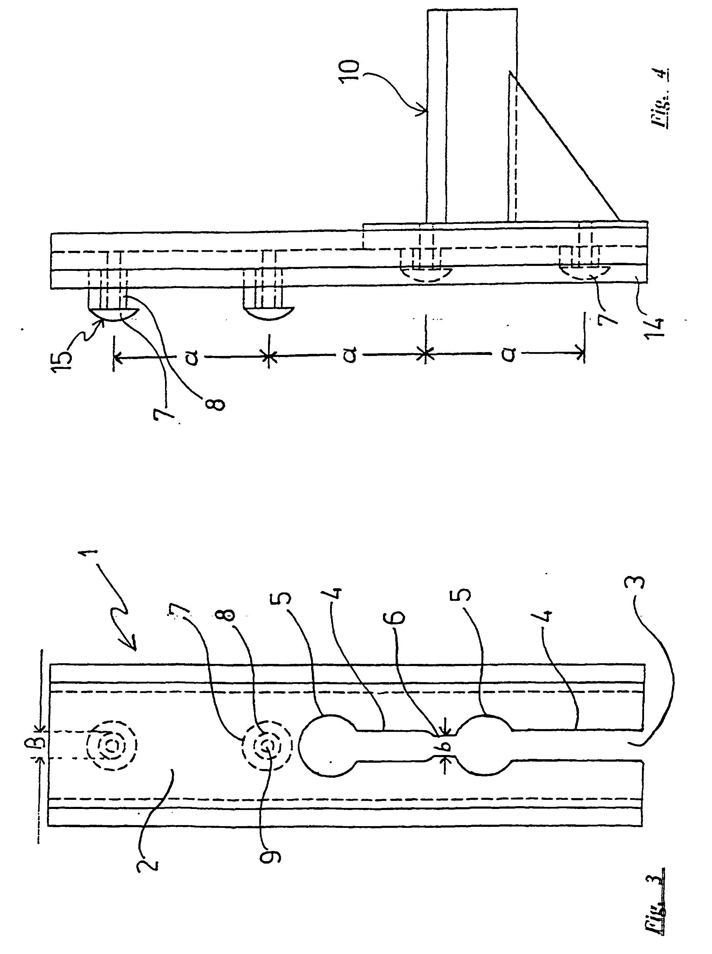

In Figur 1 erkennt man eine Stangenaufnahme 10, die im wesentlichen aus einer konkaven Auflageschale 12 und einer Trägerplatte 11 besteht. Zur Stützung der konkaven Auflageschale 12 sind, wie vor allem in Figur 2 erkennbar, seitlich an der vertikalen Trägerplatte 11 noch dreieckige Stützen 13 vorgesehen. An der Rückseite der Trägerplatte 11 sind vertikal übereinander und im Abstand zueinander zwei Kopfbolzen 15 vorgesehen, die im wesentlichen aus einem an seiner Außenseite abgerundeten Bolzenkopf 7, einem gegenüber dem Bolzenkopf 7 verjüngten Bolzenschaft 8 und einem inneren Bolzenkern 9 bestehen. Mit Ausnahme des Bolzenkernes 9 ist die gesamte Stangenaufnahme 10 einstückig und vorzugsweise aus einem faserverstärkten Kunststoffmaterial hergestellt, wobei der Bolzenkern 9 aus Metall, vorzugsweise aus Stahl besteht und in das Kunststoffmaterial der Aufnahme integriert bzw. eingegossen ist. Durch den Bolzenkern 9 wird eine vorgegebene Abscherkraft für den Bolzen 15 definiert.

Wie man sieht, ist der Kopf 7 der Kopfbolzen 15 auf seiner dem Schaft zugewandten Seite flach und eben ausgebildet, wobei sich die ebene Unterseite des Kopfes 7 senkrecht zur Bolzenachse erstreckt.

Figur 3 zeigt die Vorderansicht einer Adapterschiene, die im Querschnitt U-förmig oder H-förmig ausgebildet ist, wobei man in der Vorderansicht im unteren Teil der Adapterschiene einen durchgehenden Schlitz 3 erkennt, der sich aus zwei schmalen Schlitzteilen 4 zusammensetzt, die in Längsrichtung der Schiene vertikal übereinander und miteinander ausgerichtet angeordnet sind, an ihrem oberen Ende jeweils eine in etwa kreisrunde Schlitzaufweitung 5 aufweisen und über einen gegenüber dem schmalen Schlitzteil 4 nochmals verjüngten Schlitzabschnitt 6 miteinander verbunden sind. Der obere Schlitz besteht also aus der ganz oben angeordneten Schlitzaufweitung 5, einem nach unten daran anschließenden schmalen Schlitzabschnitt 4 und dem darunter folgenden verjüngten Schlitzabschnitt 6, dessen unteres, offenes Ende unmittelbar übergeht in die Aufweitung 5 des darunter angeordneten Schlitzes, an den sich nach unten nur noch ein weiterer schmaler Schlitzabschnitt 4 anschließt, der ohne weitere Verjüngung nach unten offen ist, obwohl auch hier nochmals eine weitere Verjüngung 6 des Schlitzes vorgesehen werden könnte.

Wie man in Figur 4 erkennt, sind auf der Rückseite der Adapterschiene wiederum zwei Kopfbolzen vorgesehen, die identisch mit den bereits oben zu Figur 1 und 2 beschriebenen Kopfbolzen der Stangenaufnahme sind. In Figur 3 ist die Position dieser Kopfbolzen und ihrer Einzelteile durch gestrichelte Linien angedeutet. Das Rastermaß des Kopfbolzenabstandes auf der Rückseite der Adapterschiene 1 ist auf jeden Fall identisch mit dem Rastermaß (mindestens der Aufweitungen) entsprechender, an ihrem unteren Ende geschlossener Schlitze der Aufnahmeschiene eines Ständers. Eine solche Aufnahmeschiene, die hier nicht dargestellt ist, hat im allgemeinen eine Vielzahl vertikal untereinander in dem erwähnten Rastermaß angeordneter Schlitze, die sich von dem Schlitz 3 bzw. den Schlitzteilen 4, 5 nur dadurch unterscheiden, daß sie nicht durch einen verjüngten Schlitzabschnitt 6 miteinander verbunden sind, sondern daß dort dieser verjüngte Schlitzabschnitt 6 durch eine geschlossene Wand ersetzt ist.

Der Übergang von dem schmalen Schlitzteil 4 zu dem nochmals verjüngten Schlitzabschnitt 6 kann unterschiedlich gestaltet werden. Er kann beispielsweise teilkreisförmig sein oder es können hier im wesentliche ebene, schräg aufeinanderzulaufende Schlitzwände vorgesehen werden. Auch der Schaftquerschnitt des Bolzens muß nicht kreisrund sein, sondern kann zum Beispiel dem erwähnten Übergang angepasst sein oder eine hiervon unabhängige Querschnittsform haben. Auch die Köpfe der Kopfbolzen müssen in der Draufsicht nicht kreisrund sein, sondern können irgendeine, der Aufweitung und/oder dem angrenzenden Schlitzteil 4 angepasste Form haben, zum Beispiel noch mit einer in den schmalen Schlitzabschnitt 4 hineinragenden Nase versehen sein, die beim Einsetzen eine eindeutige relative Ausrichtung zwischen Kopfbolzen und Schlitz bzw. zwischen Stangenaufnahme und Schiene erzwingt.

Das Rastermaß der Schlitze bzw. Schlitzaufweitungen 5 auf der Vorderseite der Adapterschiene stimmt in diesem Ausführungsbeispiel wiederum exakt mit dem Rastermaß der Kopfbolzen auf der Rückseite der Stangenaufnahme überein, wobei jedoch dieses Rastermaß nicht notwendigerweise mit dem Rastermaß der Kopfbolzen auf der Rückseite der Adapterschiene 1 übereinstimmen muß. Wenn diese Rastermaße übereinstimmend gemacht werden, so hat dies den Vorteil, daß etwaige herkömmliche Stangenaufnahmen verwendet werden könnten, um sie anstatt in eine Ständerschiene in die Adapterschiene einzuhängen. Dies sollte jedoch nur dann geschehen, wenn die Bolzenschäfte 8 der Kopfbolzen ein entsprechend einheitliches Maß aufweisen, so daß auch bei Verwendung herkömmlicher Stangenaufnahmen die gewünschte Nachgiebigkeit des verjüngten Schlitzabschnittes 6 bei der vorgegebenen Grenzkraft gegeben ist.

Falls jedoch diese Schaftdurchmesser oder auch die Reibungskräfte zwischen Schäften und Schlitzwänden variieren, kann es günstiger sein, für den Abstand zwischen den Aufweitungen 5 an dem Schienenadapter und den entsprechenden Abstand der Kopfbolzen auf der Rückseite der Stangenaufnahme ein Maß vorzusehen, welches von dem Rastermaß der Kopfbolzen 15 auf der Rückseite der Aufnahmeschiene und dem entsprechenden Rastermaß der Aufweitungen an der Schiene eines Ständers abweicht, so daß grundsätzlich nur die exakt aufeinander abgestimmten Stangenaufnahmen 10 und Adapterschienen 1 in Kombination miteinander Verwendung finden können.

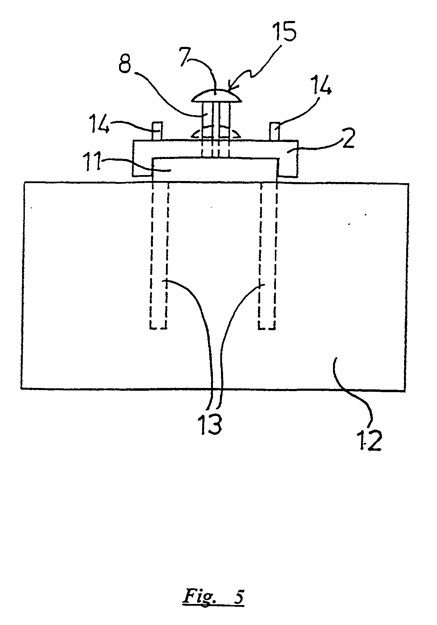

Figur 5, die einer Draufsicht von oben auf Figur 4 entspricht, zeigt nochmals den U-förmigen Querschnitt der Adapterschiene 1, die aus dem U-Profil 2 besteht, an welcher allerdings auf der Rückseite nochmals zwei Abstandsschienen 14 angeformt bzw. aufgeschweißt sind. Die Höhe dieser Abstandhalter 14 ist so bemessen, daß die Köpfe 7 der Kopfbolzen der Stangenaufnahme 10 in dem Zwischenraum zwischen den Abstandhalterschienen 14 aufgenommen werden können, wenn die Köpfe 7 der Kopfbolzen 15 an der Rückseite der Adapterschiene 1 in eine entsprechende Schiene eines Ständers eingehängt sind. In Figur 4 ist deutlich sichtbar, daß die Köpfe 7 der Kopfbolzen 15 der Stangenaufnahme 10 nicht über die hintere Kante dieser Abstandhalterschienen 14 hinausragen.

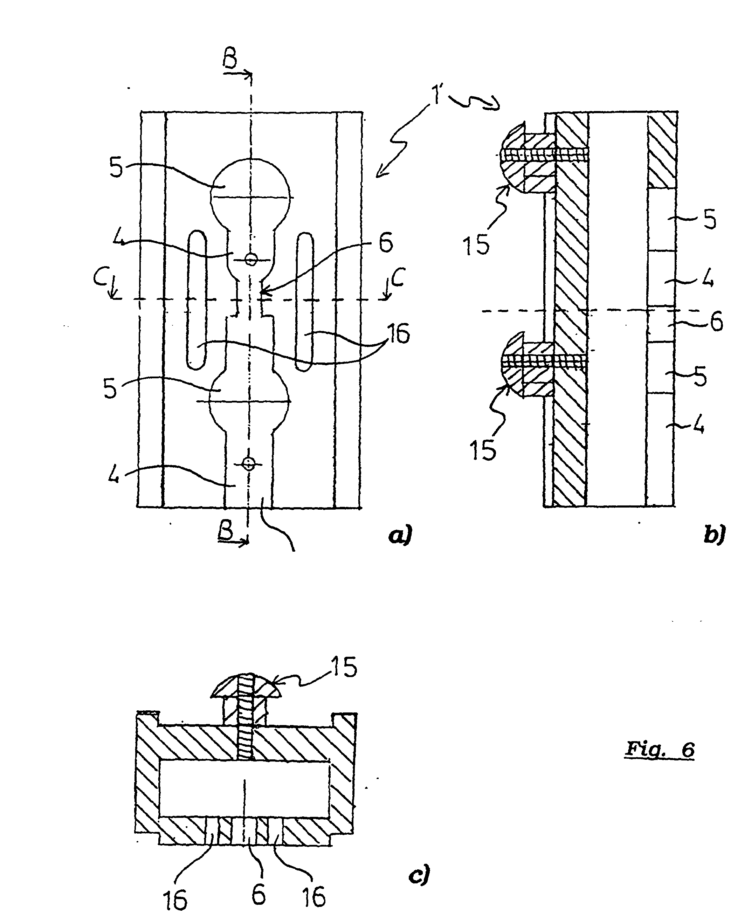

Die Figuren 6a bis c zeigen eine Variante 1' einer Adapterschiene, die im vorliegenden Fall ein kastenförmiges Profil hat. Figur 6a zeigt die Draufsicht von vorn auf die Adapterschiene 1, analog zu der Draufsicht gemäß Figur 3 auf die Adapterschiene 1. Wie man erkennt, sind neben den beiden übereinander angeordneten Aufnahmeschlitzen 4 für die Kopfbolzen 15 einer Stangenaufnahme 10 zwei zusätzliche, zum Schlitzabschnitt 6 parallele Schlitze bzw. Langlöcher 16 vorgesehen, die das elastische Aufbiegen des verjüngten Schlitzabschnittes 6 erleichtern sollen, der den oberen und unteren Schlitz miteinander verbindet. Diese Ausgestaltung führt dazu, daß das Material der Adapterschiene während der Aufweitung des verjüngten Schlitzabschnittes 6 durch einen entsprechend belasteten Kopfbolzenschaft geringer belastet wird als dies im Falle der in Figur 3 und 4 dargestellten Ausführungsform geschehen könnte.

Außerdem hat die in Figur 6a - c dargestellte Adapterschiene aufgrund ihres kastenförmigen Querschnittes den Vorteil, daß sie gegenüber der in den Figuren 3 bis 5 dargestellten Schiene kürzer hergestellt werden kann, da die Kopfbolzen 15 auf der Rückseite der Adapterschiene 1' an der Rückwand des Kastenprofils angeordnet sind und somit vertikal auf derselben Höhe angeordnet werden können, wie die in der vorderen Wand des kastenförmigen Profils vorgesehenen Schlitze. Die Schnittlinien, weiche die Lage der in den Figuren 6b bzw. 6c dargestellten Schnittebenen anzeigen, sind durch gestrichelte Linien B-B bzw. C-C angedeutet.

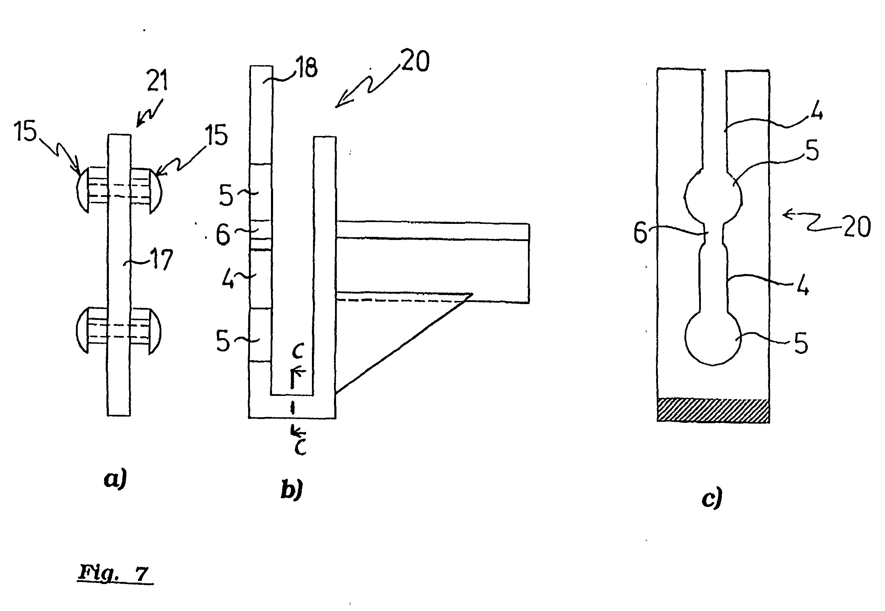

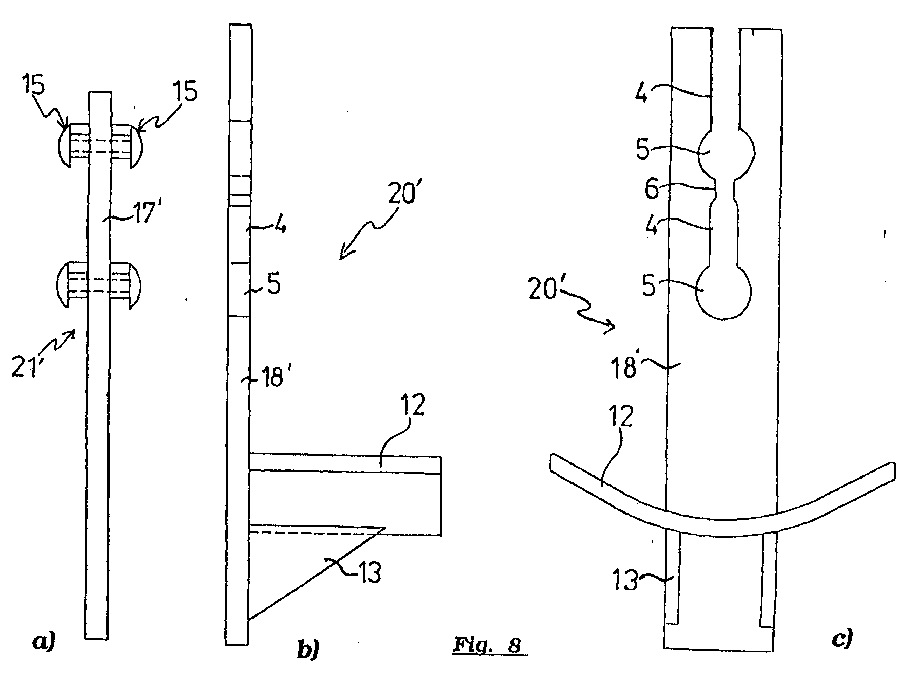

Die Figuren 7 und 8 zeigen jeweils eine Ausführungsform, bei welcher die Stangenaufnahme, die hier insgesamt mit 20 bzw. 20' bezeichnet ist, in Form eines Schienenstückes mit einem aufspreizbaren Schlitz ausgebildet ist. Um diese Stangenaufnahme auch an herkömmlichen Ständern aufhängen zu können, ist jeweils ein Kopfbolzenadapter 21 bzw. 21' vorgesehen. Die herkömmlichen Ständer weisen Schlitze mit Erweiterungen auf, in welche der Kopfbolzenadapter mit zwei übereinander angeordneten Kopfbolzen 15, die sich auf einer Seite einer Platte 17 befinden, eingehängt werden kann.

Auf der gegenüberliegenden Seite sind vorzugsweise identische Kopfbolzen 15 in einem Abstand vorgesehen, der dem Abstand zweier Aufweitungen 5 einer entsprechenden Schiene 18 an einer Stangenaufnahme 20 entspricht (siehe Figuren 7b, 7c). Wie bereits erwähnt, könnte der Abstand der Kopfbolzen 15 auf beiden Seiten des Kopfbolzenadapters 21 auch unterschiedlich sein, wobei der Abstand auf der einen Seite mit den entsprechenden Abständen der Schlitzaufweitungen an einer Schiene übereinstimmt, während der Kopfbolzenabstand auf der anderen Seite mit dem Abstand der Schlitzaufweitungen 5 an dem Schienenabschnitt 18 übereinstimmen sollte.

Auch hier haben die Kopfbolzen keinen exakten kreisförmigen Querschnitt, sondern eine Erweiterung in Schlitzrichtung, die eine bestimmte Orientierung des Kopfbolzenadapters 21 anzeigt.

Die Stangenaufnahme 20 ist entweder als U-förmig gebogenes Flachmaterial ausgebildet, kann jedoch auch analog zu Figur 6c im Querschnitt ein Kastenprofil haben. Allerdings sind dann auch entsprechende parallele Langlöcher 16 möglicherweise erforderlich, um die Aufweitung des verjüngten Schlitzabschnittes 6 mit der vorgesehenen Kraft zu ermöglichen.

Figur 7c zeigt einen Schnitt durch die Stangenaufnahme 20 entlang der Linie C-C in Figur 6b. Wie man erkennt, ist die Ausbildung der Schlitze praktisch identisch mit der Ausbildung der Schlitze in den zuvor beschriebenen Ausführungsformen gemäß den Figuren 3 und 4.

Die Ausführungsform gemäß Figur 8 unterscheidet sich von der Ausführungsform gemäß Figur 7 im wesentlichen nur dadurch, daß die Stangenaufnahme 20' nicht U-förmig gebogen oder als Kastenprofil hergestellt ist, sondern aus einem ebenen Flachmaterial 18', wobei dann allerdings die schalenförmige Stangenauflage 12 mit den Verstrebungen 13 gegenüber den Schlitzen in Längsrichtung versetzt ist, um jegliche Störungen zwischen der Stangenauflage 12 und den Schlitzen bzw. den in die Schlitze eingeführten Kopfbolzen 15 zu vermeiden, auch wenn es im Prinzip möglich wäre, die gesamte Stangenaufnahme so zu gestalten, daß die Schlitze oberhalb und unterhalb der schalenförmigen Auflage 12 angeordnet sind.

Der Kopfbolzenadapter 21' unterscheidet sich von dem Kopfbolzenadapter 21 der Figur 7 nur durch eine größere Länge, um der aus Flachmaterial bestehenden rückwärtigen Platte 18' der Stangenaufnahme 20' eine ihrer Länge entsprechende Auflagefläche bieten zu können. Grundsätzlich könnten jedoch die Adapter 21 und 21' bei den Ausführungsformen der Figuren 7 und 8 auch gegeneinander ausgetauscht werden oder man brauchte nur einen einzigen Typ eines Kopfbolzenadapters, zum Beispiel den Kopfbolzenadapter 21', für beide Varianten von Stangenaufnahmen 20 oder 20' vorzusehen.

## Patentansprüche

1. Halterung für Stangen von Sprunghindernissen im Pferdesport, mit einer schalenförmigen Stangenaufnahme (10), welche in eine im Gebrauch im allgemeinen vertikale Schiene (1) eingehängt ist, die an einem Ständer befestigt ist, wobei die Aufnahme (10) und die Schiene (1) über Kopfbolzen (15), die sich von einem dieser beiden Teile in Schlitze (3) an dem anderen der beiden Teile hinein erstrecken, miteinander verbindbar sind, und wobei die Schlitze (3) schmale Schlitzteile (4) mit einer Breite (B) haben, die in etwa der Breite des Bolzenschaftes (8) der Kopfbolzen (15) entspricht und die geringer ist als der Durchmesser des Kopfes (7) der Kopfbolzen (15), und eine Schlitzaufweitung (5) haben, durch welche ein Kopf (7) eines Kopfbolzens (15) hindurchtreten kann, um auf diese Weise die Kopfbolzen (15) in die Schlitze (3) einzusetzen und durch Einführen zunächst des Kopfes in die Aufweitung (5) und Verschieben des Schaftes (8) in den schmalen Schlitzteil (4) verriegeln zu können, wobei die Schlitze (3) an ihrem von der Aufweitung abgewandten Ende offen sind, und zwar in Form eines nochmals verjüngten Schlitzabschnittes (6), dessen Breite (b) so bemessen ist, daß die in dem schmalen Schlitzteil (4) aufgenommenen Bolzenschäfte (8) nur unter Überwindung einer vorgegebenen, in Längsrichtung des Schlitzes (3) wirkenden Kraft in diesen verjüngten Schlitzabschnitt (6) hinein und zum offenen Ende des Schlitzes (3) hindurchdrückbar ist, **dadurch gekennzeichnet, daß** die Schiene (1) als Adapter ausgebildet ist, welche einerseits eine oder mehrere Schlitze (3) zur Aufnahme von Kopfbolzen aufweist, welche an der Aufnahme (10) angeordnet sind und andererseits ebenfalls mindestens einen Kopfbolzen (15) aufweist für das Einsetzen in Schlitze einer an einem Ständer fest angebrachten Schiene, die kein offenes Ende aufweisen.

2. Halterung nach Anspruch 1, **dadurch gekennzeichnet, daß** ein oder mehrere Kopfbolzen (15) fest mit der Aufnahme (10) verbunden sind.

3. Halterung nach Anspruch 2, **dadurch gekennzeichnet, daß** zwei Bolzen im Abstand (a) vertikal untereinander an der Rückseite der Aufnahme (10) angebracht sind.

4. Halterung nach einem der Ansprüche 1 bis 3, **dadurch gekennzeichnet, daß** die Adapterschiene (1) im Querschnitt U-förmig oder kastenförmig ausgebildet ist.

5. Halterung nach einem der Ansprüche 1 bis 4, **dadurch gekennzeichnet, daß** der Abstand der Kopfbolzen an der Rückseite der Adapterschiene sich von dem Abstand der erweiterten Kopfbolzenaufnahmen (5) der Schlitze an der Adapterschiene (1) unterscheidet.

6. Halterung nach einem der Ansprüche 1 bis 5, **dadurch gekennzeichnet, daß** in der Schiene neben dem verjüngten Schlitzabschnitt Aussparungen bzw. Langlöcher vorgesehen sind, welche die elastische Aufweitung des verjüngten Schlitzabschnittes erleichtem.

7. Halterung nach einem der Ansprüche 1 bis 6, **dadurch gekennzeichnet, daß** die Aufnahme (10) und die Schiene bzw. Adapterschiene (1) aus einem faserverstärkten Kunststoff hergestellt sind.

8. Halterung nach einem der Ansprüche 1 bis 7, **dadurch gekennzeichnet, daß** die einen offenen Aufnahmeschlitz (3) aufweisende Schiene (1) mit einem nach oben offenen Schlitz an der schalenförmigen Stangenauflage (10) befestigt bzw. mit dieser einstückig ausgebildet ist, während die Kopfbolzen von einem Ständer oder Adapter hervorstehend angeordnet sind.

## Claims

1. Mounting for poles of jumps in equestrian sport, with a dish-shaped pole receiver (10) which is suspended on a rail (1), generally vertical in use, which is fixed to a stand, wherein the receiver (10) and the rail (1) can be connected together by means of headed bolts (15) which extend in slots (3) from one of the two parts to the other of the two parts, and wherein the slots (3) have narrow slot parts (4) with a width (B) approximately corresponding to the width of the bolt shaft (8) of the headed bolt (15), and which is less than the diameter of the head (7) of the headed bolt (15), and have a widened part (5) in the slot through which a head (7) of a headed bolt (15) can be inserted in order, in this way, to be able to fit the headed bolts (15) in the slots (3) and be able to lock them by firstly introducing the head into the widened part (5) and pushing the shaft (8) into the narrow slot part (4), wherein, at the end facing away from the widened part, the slots (3) are open and in the form of a slot section (6) which is narrowed further, the width (b) of which is dimensioned such that the bolt shaft (8) received in the narrow slot part (4) is only moveable into this narrowed slot section (6) and through the open end of the slot (3) by overcoming a predetermined force acting in the longitudinal direction of the slot (3), **characterised in that** the rail (1) is developed as an adaptor which on the one hand has one or more slots (3) to receive headed bolts which are arranged at the receiver (10) and on the other hand also has at least one headed bolt (15) for the insertion of a rail firmly fitted to a stand into slots which have no open end.

2. Mounting according to claim 1, **characterised in that** one or more headed bolts (15) are firmly connected to the receiver (10).

3. Mounting according to claim 2, **characterised in that** two bolts are fitted at a distance apart (a) vertically one below the other on the rear side of the receiver (10).

4. Mounting according to one of claims 1 to 3, **characterised in that** the adaptor rail (1) is configured U-shaped or box-shaped in cross-section.

5. Mounting according to one of claims 1 to 4, **characterised in that** the distance apart of the headed bolts on the rear side of the adaptor rail differs from the distance apart of the widened headed bolt receivers (5) of the slots on the adaptor rail (1).

6. Mounting according to one of claims 1 to 5, **characterised in that** in the rail, in addition to the narrowed slot section, cut-outs or elongated apertures are provided which facilitate the elastic widening of the narrowed slot section.

7. Mounting according to one of claims 1 to 6, **characterised in that** the receiver (10) and the rail or adaptor rail (1) are manufactured from a fibre-reinforced plastics material.

8. Mounting according to one of claims 1 to 7, **characterised in that** the rail (1) provided with an open receiving slot (3) is fitted to or is configured integrally with an upwardly open slot on the dish-shaped pole support (10), while the headed bolts are arranged projecting from a stand or adaptor.

## Revendications

1. Support de barres d'obstacle utilisées en équitation, lequel support comporte un logement de barre (10) en forme de cuvette qui est accroché dans une glissière (1), généralement en position verticale en utilisation, qui est fixée à un montant, le logement (10) et la glissière (1) pouvant être reliés l'un à l'autre par des boulons à tête (15) qui s'étendent depuis l'une de ces deux pièces dans des fentes (3) ménagées dans l'autre de ces deux pièces, et les fentes (3) présentant une portion de fente étroite (4) d'une largeur (B) qui correspond à peu près à la largeur de la tige (8) des boulons à tête (15) et qui est inférieure au diamètre de la tête (7) des boulons à tête (15), et une portion de fente élargie (5) qui permet le passage d'une tête (7) d'un boulon à tête (15) pour insérer ainsi les boulons à tête (15) dans les fentes (3) et pour pouvoir les verrouiller en introduisant tout d'abord la tête dans la portion élargie (5) et en faisant glisser la tige (8) dans la portion de fente étroite (4), les fentes (3) étant ouvertes à leur extrémité opposée à la portion élargie, c'est-à-dire se présentant sous la forme d'une portion de fente (6) encore amincie dont la largeur (b) est dimensionnée de telle sorte que les tiges de boulon (8), reçues dans la portion de fente étroite (4), ne peuvent être serrées dans cette portion de fente amincie (6) et jusqu'à l'extrémité ouverte de la fente (3) qu'en surmontant une force prédéterminée agissant dans la direction longitudinale de la fente (3), **caractérisé en ce que** la glissière (1) est conformée en adaptateur et comporte d'une part une ou plusieurs fentes (3) destinées à recevoir des boulons à tête qui sont placés au niveau du logement (10) et d'autre part également au moins un boulon à tête (15) pour l'insertion dans des fentes qui sont ménagées dans une glissière montée fixe sur un support et qui ne comporte aucune extrémité ouverte.

2. Support selon la revendication 1, **caractérisé en ce qu'**un ou plusieurs boulons à tête (15) sont reliés de manière fixe au logement (10).

3. Support selon la revendication 2, **caractérisé en ce que** deux boulons sont montés verticalement au dos du logement (10) en étant l'un au-dessous de l'autre à une distance (a).

4. Support selon l'une des revendications 1 à 3, **caractérisé en ce que** la glissière d'adaptation (1) est conformée en U en coupe ou en boîte.

5. Support selon l'une des revendications 1 à 4, **caractérisé en ce que** la distance entre les boulons à tête au dos de la glissière d'adaptation est différente de la distance entre les logements élargis de boulon à tête (5) des fentes ménagées dans la glissière d'adaptation (1).

6. Support selon l'une des revendications 1 à 5, **caractérisé en ce que** des trous oblongs sont ménagés dans la glissière à côté de la portion de fente amincie, lesquels trous oblongs facilitent l'élargissement élastique de la portion de fente amincie.

7. Support selon l'une des revendications 1 à 6, **caractérisé en ce que** le logement (10) et la glissière respectivement la glissière d'adaptation (1) sont fabriqués à partir d'une matière plastique renforcée par des fibres.

8. Support selon l'une des revendications 1 à 7, **caractérisé en ce que** la glissière (1), comportant une fente de logement ouverte (3), est fixée à une fente ouverte vers le haut ménagée dans le logement de barre (10) en forme de cuvette respectivement conformée en venue de matière avec ledit logement, tandis que les boulons à tête sont disposés de façon à faire saillie d'un montant ou d'un adaptateur.
